Europäisches Patentamt

**European Patent Office**

Office européen des brevets

(19)

(11) Numéro de publication: **0 106 713**

**A1**

(12) **DEMANDE DE BREVET EUROPEEN**

(21) Numéro de dépôt: **83401645.3**

(22) Date de dépôt: **10.08.83**

(51) Int. Cl.³: **A 01 F 25/20**
**A 01 C 23/00, A 01 K 5/00**
**B 65 F 3/18**

(30) Priorité: **11.08.82 FR 8213989**

(43) Date de publication de la demande:
**25.04.84 Bulletin 84/17**

(84) Etats contractants désignés:
**AT BE CH DE GB IT LI LU NL SE**

(71) Demandeur: **S.A. AUDUREAU Société dite:**
**La Copechagniere**
**F-85260 L'Herbergement (Vendée)(FR)**

(72) Inventeur: **Audureau, Bernard**
**Route de Nantes**
**F-85620 Rocheserviere Vendée(FR)**

(74) Mandataire: **Chevallier, Robert Marie Georges**
**Cabinet BOETTCHER 23, rue La Boétie**
**F-75008 Paris(FR)**

(54) **Machine mélangeuse-distributrice de produits divers pour l'agriculture.**

(57) Dans une caisse (1) est fixé à chaque paroi latérale (6) un chemin de guidage sans fin (12) à profilés en U ouverts vers l'intérieur et ce chemin guide un organe râcleur sans fin (14) comprenant des barres transversales espacées (15) reliées par des éléments de liaison sur lesquels agissent directement des vérins (22) d'un organe moteur (20) monté au sommet des parois latérales (6), de sorte que la machine peut mélanger et distribuer aussi bien du fourrage, des engrais, du lisier et du fumier.

Fig.6

EP 0 106 713 A1

Croydon Printing Company Ltd

Machine mélangeuse-distributrice de produits divers pour l'agriculture.

L'invention a pour objet une machine dont la conception lui permet de servir au mélange et à la distribution de produits divers utilisés en agriculture comme le fourrage composé destiné aux animaux, les engrais mélangés destinés à être épandus dans les champs, le fumier et le lisier qui doivent être homogénéisés avant d'être, eux aussi, épandus dans les champs.

La machine de l'invention est supportée par des roues; elle peut être simplement tractée ou elle peut être automotrice. Ces deux variantes de réalisation se rapportent à des organes classiques qui ne sont pas directement concernés par l'invention.

Une machine selon l'invention comprend un châssis à roues sur lequel est montée une caisse susceptible d'être rendue étanche au moins dans sa moitié inférieure. Cette caisse a un fond, deux parois latérales et deux parois extrêmes; ces dernières sont incurvées, de préférence mais pas nécessairement, et sont avantageusement conformées en demi-cylindre de diamètre égal à la profondeur de la caisse.

A l'intérieur de la caisse, sur chacun de ses côtés longitudinaux opposés est monté un chemin de guidage sans fin fixé à une paroi latérale ou à une paroi latérale et au fond. Entre les deux chemins de guidage opposés est monté libre en circulation un organe râcleur articulé sans fin comprenant des barres râcleuses transversales espacées se déplaçant à proximité du fond dans une partie de leur course. Sur chacun des côtés de la caisse, ces barres râcleuses sont reliées respectivement à leurs extrémités opposées par des éléments de liaison articulés et sont associées à des éléments de guidage qui circulent chacun le long d'un chemin de guidage correspondant. L'organe râcleur articulé comprend un brin inférieur se déplaçant dans un plan proche du fond et un brin supérieur se déplaçant dans un plan proche du haut de la caisse. Au sommet de celle-ci est installé un mécanisme moteur entraînant le brin supérieur de l'organe râcleur articulé, au moins dans une direction et de préférence dans l'une ou l'autre direction longitudinale de la caisse, sélectivement.

De préférence encore, ce mécanisme moteur est du type à vérins à course alternative agissant sur les éléments de liaison dans un sens de sa course afin de faire circuler l'organe râcleur articulé.

Dans un mode de réalisation de l'invention, le mécanisme moteur comprend deux vérins espacés transversalement associés chacun respectivement aux éléments de liaison articulés sur chacun des côtés de la caisse, ces éléments étant pourvus sur une face de saillies espacées régulièrement et les extrémités mobiles des vérins étant munies d'un moyen tel qu'un cliquet apte à accrocher ces saillies dans un sens de leur course. A leur extrémité opposée les vérins sont montés pivotant autour d'un arbre transversal de façon à pouvoir occuper l'une quelconque de deux positions opposées à 180°.

A partir d'une structure conforme à l'invention telle que définie ci-dessus, la machine peut recevoir divers équipements connus en soi à usage auxiliaire, selon l'utilisation finale envisagée. Toutefois, il n'est pas impossible de réaliser une machine selon l'invention, à emploi universel, munie de tous les équipements ou d'équipements facilement interchangeables, afin qu'elle puisse servir à tous les emplois que permet sa conception.

Dans un souci de clarté, on mentionnera séparément les équipements appropriés aux trois emplois distincts de la machine de l'invention.

Dans les trois cas, il est prévu dans la partie inférieure de la caisse une ouverture d'évacuation obturable à volonté pratiquée transversalement dans une des parois extrêmes.

Pour mélanger et distribuer des engrais, la machine est équipée d'un moyen de chargement, à godet; l'ouverture d'évacuation transversale est ménagée de préférence dans la paroi extrême incurvée arrière et un dispositif d'égalisation du débit et d'épandage est installé en dessous de cette ouverture.

Pour prélever, mélanger et distribuer du fourrage composé, la machine est équipée d'un moyen de chargement en fourrage; l'ouverture d'évacuation transversale est ménagée de préférence dans la paroi extrême incurvée avant et un dispositif d'évacuation du fourrage est installé au voisinage de cette ouverture. Le moyen de chargement est lui-même d'un type connu approprié aux besoins : bras dérouleur de balles rondes, bras à désileuse avec moyen de coupe de blocs parallélépipédiques, bras désileur à griffe comprenant la paroi arrière rendue mobile et associée à une rampe de chargement.

Pour prélever, mélanger et répandre du lisier et du fumier, la machine est équipée d'un moyen de chargement à godet et à fourche; l'ouverture d'évacuation transversale est ménagée de préférence dans la paroi extrême incurvée avant et un dispositif d'éjection est installé au voisinage de cette ouverture.

Il est possible aussi, principalement pour la manutention du fourrage, d'équiper la machine d'essieux à hauteur réglable au-dessus du sol, de façon connue en soi.

Pour mieux faire comprendre l'invention et ses avantages, on donnera maintenant une description détaillée de la partie concernée par l'invention; on décrira plus sommairement les équipements auxiliaires connus en soi que cette machine peut recevoir. On se reportera aux dessins annexés dans lesquels :

- la figure 1 est une vue de l'arrière , en perspective, d'une machine selon l'invention munie d'un équipement pour le fourrage,

- la figure 2 est une vue de côté, agrandie, en coupe par un plan longitudinal, de la caisse conforme à l'invention de la même machine ,

- la figure 3 est une vue partielle de détail, en coupe par un plan transversal, selon III-III de la figure 2 ,

- les figures 4 à 6 sont des vues d'ensemble en coupe par un plan longitudinal d'une machine selon l'invention équipée respectivement pour mélanger et distribuer des engrais, pour prélever, mélanger et distribuer du fourrage, pour prélever, mélanger et répandre du lisier et du fumier ,

- les figures 7 et 8 sont des vues partielles montrant deux variantes du moyen de chargement qui peuvent être montées sur la machine de la figure 5 ,

- la figure 9 est une vue partielle montrant une variante du dispositif d'évacuation du fourrage de la machine illustrée par la figure 5 ,

- la figure 10 est une vue partielle de dessus, en coupe horizontale, d'une variante du dispositif d'éjection de la machine de la figure 6.

Une machine selon l'invention a une caisse 1 qui est supportée dans cet exemple par un châssis à deux roues 2 montées chacune à l'extrémité d'un bras 3 dont l'autre extrémité est articulée autour d'un arbre pour pouvoir pivoter sous l'effet d'un vérin 4. Cette disposition, connue en soi, permet d'élever la caisse 1 au-dessus du sol ou de l'abaisser jusqu'à ce dernier. L'utilité en apparaîtra plus loin.

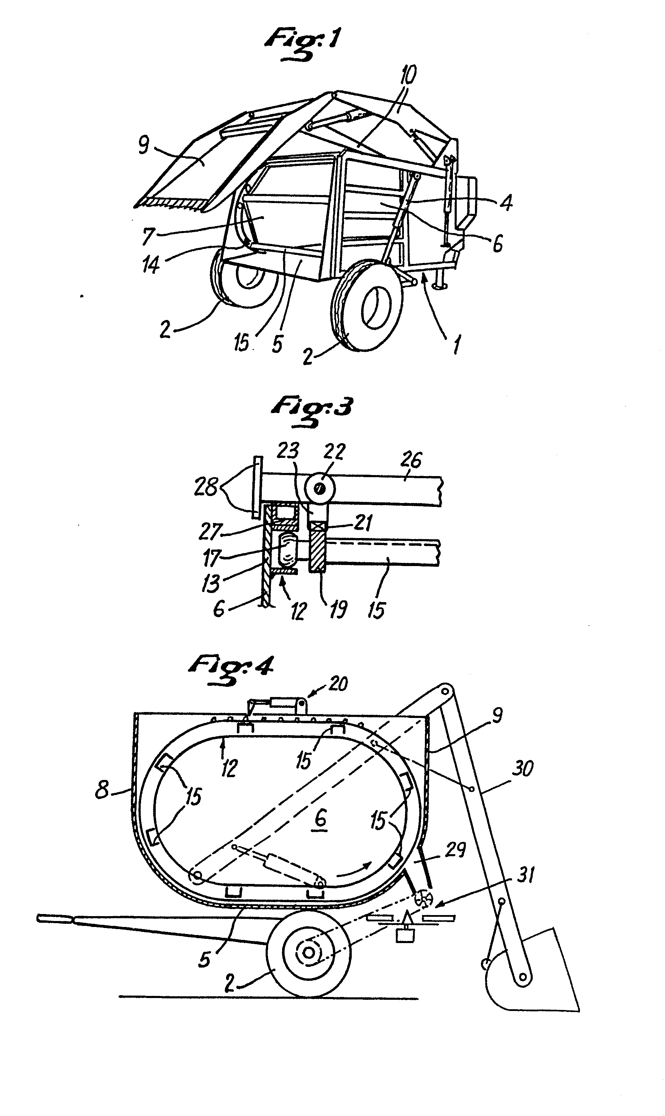

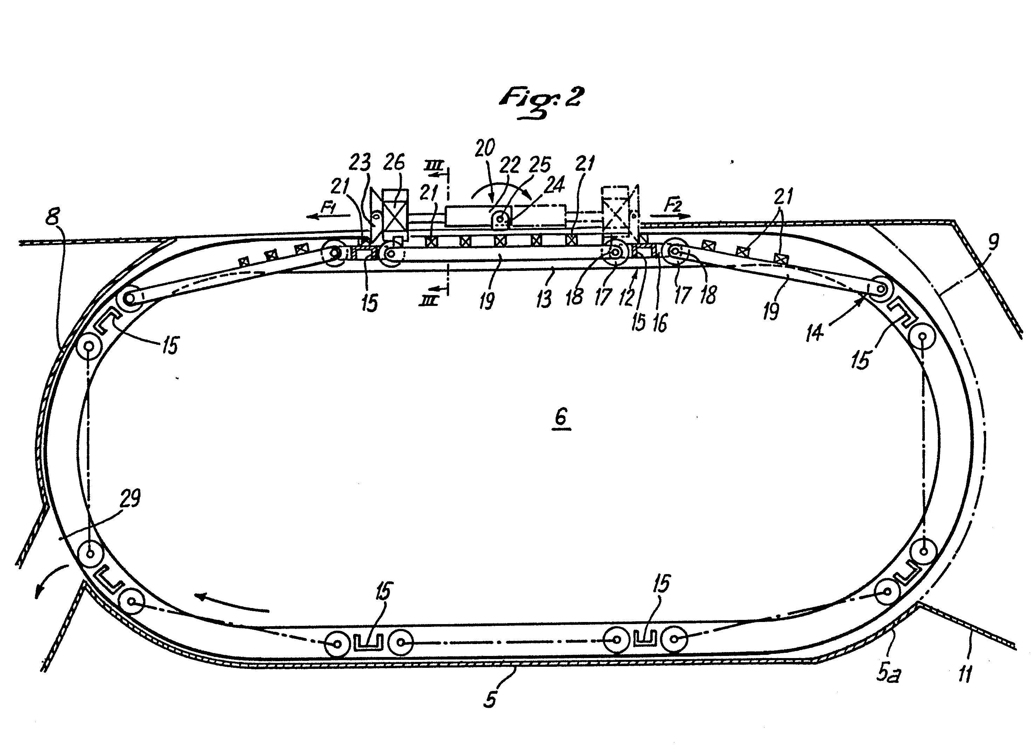

D'une façon générale, la caisse 1 a un fond 5, plat de préférence, deux parois latérales espacées 6, 7 et deux parois extrêmes comprenant une paroi avant 8 et une paroi arrière 9. Sur la figure 1, seule la paroi arrière 9 est visible. Il est préférable d'adopter des parois avant et arrière 8, 9 incurvées et il est avantageux de leur donner un diamètre égal à la profondeur de la caisse 1, comme on le voit sur les figures 4 et 6.

Sur les figures 1 et 5, seule la paroi avant 8 est incurvée en demi-cylindre. La paroi arrière 9 est plane et mobile. Elle est portée par deux bras 10 articulés à l'avant de la caisse 1 et manoeuvrés par des vérins. Le fond est terminé à l'arrière par une rampe 11, dirigée vers le bas, qui fait suite à une incurvation 5a vers le haut. Ce mode de montage d'une paroi 9 qui devient un moyen de remplissage de la caisse 1, en association avec la rampe 11 et avec les bras 3 portant les roues 2 pour abaisser la rampe 11 jusque sur le sol, est connu en soi. Il constitue un moyen de chargement de la caisse 1 à partir de fourrage entassé. Après chargement, la paroi arrière 9 est appliquée pour fermer la caisse 1. Cette fermeture pourrait être rendue étanche, mais dans le cas du traitement du fourrage illustré par les figures 1 et 5, une telle étanchéité n'est pas obligatoire. Néanmoins, la conception de la machine de l'invention est favorable à la réalisation d'une caisse 1 étanche quand l'étanchéité est nécessaire comme dans le cas des figures 4 et 6, ainsi qu'on l'expliquera plus loin.

La caisse 1 est ouverte à sa partie supérieure; elle contient sur chacun de ses côtés longitudinaux opposés un chemin de guidage sans fin 12 (figure 2). Ce dernier est fixé, de préférence, à la face intérieure de chacune des parois latérales 6, 7. Il pourrait être fixé, en partie, au fond 5 de la caisse 1. Chaque chemin de guidage est constitué avantageusement par un profilé en U 13 dont les branches et l'ouverture qu'elles limitent sont tournées vers l'intérieur de la caisse 1 (figure 3). D'autres moyens ou d'autres profilés de guidage équivalents pourraient être adoptés. Entre les deux chemins de guidage 12 opposés est monté libre en circulation un organe râcleur articulé sans fin 14 qui comprend des barres transversales 15, espacées, disposées pour se déplacer à proximité du fond 5 sur une partie de leur course sans fin. Ces barres 15 sont guidées à leurs extrémités opposées par les profilés en U 13. On pourrait, à cet effet, engager directement les barres 15 dans ces profilés 13. Il est préférable de prévoir des éléments d'usure situés aux extrémités des barres transversales 15 et il est avantageux de fixer à chacune des extrémités de chaque barre 15 un élément d'assemblage 16 qui lui est perpendiculaire et qui porte deux galets ou patins 17. Ceux-ci sont situés de part et d'autre de chaque barre 15 et sont engagés dans les profilés en U 13. Chaque galet ou patin de glissement 17 est monté sur l'élément d'assemblage 16 à l'aide d'un arbre 18 qui sert d'axe d'articulation à une extrémité d'un élément de liaison articulé 19. Toutes les barres transversales 15 sont donc réunies et tenues espacées à leurs deux extrémités opposées par des éléments de liaison articulés successifs 19.

Chaque chemin de guidage 12 s'étend le long du fond 5 des parois extrêmes 8, 9 et du sommet de la caisse 1.

Ceci explique pourquoi il est préférable d'adopter des parois extrêmes 8, 9 incurvées, de préférence en demi-cylindre; les chemins de guidage 12 en suivent plus facilement le profil. Les barres 15 sont guidées à proximité des faces intérieures de ces parois et du fond et ont un effet de râclage. Elles entraînent avec elles et remuent fortement toute matière granuleuse ou fibreuse contenue dans la caisse 1 et la rende homogène. Il est possible cependant d'espacer davantage les parois extrêmes 8, 9 des chemins de guidage 12, et notamment la paroi arrière 9 comme on l'a expliqué plus haut.

Il ressort de la description donnée ci-dessus que l'organe râcleur sans fin 14 a un brin inférieur qui suit le fond 5 et un brin supérieur qui suit l'ouverture supérieure de la caisse 1. Un mécanisme moteur 20 est installé au sommet de la caisse 1 pour agir sur le brin supérieur et pour entraîner l'ensemble en déplacement. De cette façon, ce mécanisme n'a aucune pièce située dans le volume occupé par la matière mélangée; de plus aucune ouverture permanente n'est nécessaire à travers les parois pour le passage d'un organe d'entraînement.

Tout mécanisme moteur apte à agir sur le brin supérieur pour l'entraîner peut être adopté.

Il est préférable de choisir un mécanisme agissant directement sur les éléments de liaison articulés 19. A cet effet, les chemins de guidage 12 ont dans leur partie supérieure, qui correspond au brin supérieur de l'organe râcleur sans fin 14, une zone centrale rectiligne de longueur suffisante pour que chaque élément de liaison 19 se trouve en passant par cette zone en position de coopération avec le mécanisme d'entraînement. Il est avantageux de munir de saillies espacées 21 la face extérieure de chaque élément de liaison 19 et de monter au sommet des parois latérales 6, 7 des vérins 22 dont la tige de piston est pourvue à son extrémité libre d'un dispositif à cliquet 23 apte à pousser, ou à tirer, les saillies 21 dans un sens de déplacement et à s'effacer en sens inverse en rencontrant les saillies successives 21.

Dans l'exemple décrit ici, une chape 24 est fixée au sommet des parois latérales 6, 7 et chaque vérin 22 est articulé dans cette chape par son extrémité fixe opposée au cliquet 23 au moyen d'un axe 25 qui permet de le faire pivoter de 180°. Ainsi le vérin 22 peut être allongé à partir de l'axe 25 dans une direction indiquée par une flèche $F_1$ dans une position où il est dessiné en trait plein sur la figure 2 ou dans une direction opposée (flèche $F_2$) dans une position où il est dessiné en trait mixte.

L'extrémité mobile libre de la tige de chaque vérin 22 est fixée à une barre d'attelage transversale 26 qui assure le synchronisme de la marche des deux vérins 22. Cette barre d'attelage 26 repose sur un profilé de soutien longitudinal 27 fixé au sommet des parois 6, 7 (se reporter à la figure 3, ce profilé n'étant pas représenté sur la figure 2). En outre, à ses extrémités opposées la barre d'attelage 26 est pourvue de joues extrêmes 28 qui assurent son guidage le long des parois 6, 7 ou des profilés 27 fixés à celles-ci. Cette barre d'attelage 26 est munie des dispositifs à cliquet 23 qui coopèrent avec les saillies 21. Les cliquets 23 sont doubles de façon à pouvoir fonctionner de la même façon, en poussant ou en tirant, quand les vérins 22 occupent l'une ou l'autre de leurs deux positions.

Dans l'exemple représenté, les vérins 22 agissent sur les éléments de liaison 19 en poussant, pendant leur course d'extension. Pendant leur course de rétraction, ils sont alimentés en fluide à un débit plus grand qui leur impose un retour rapide.

Grâce à cette conception apportée par l'invention, la caisse 1 peut être rendue étanche, quand elle est destinée à être utilisée pour un produit liquide comme le lisier ou pour un produit granulaire ou poudreux comme certains engrais.

La sortie des produits hors de la caisse 1 après leur malaxage se fait par une ouverture d'évacuation transversale 29 ménagée dans la partie inférieure de la paroi extrême avant 8 ou de la paroi extrême arrière 9. Un volet (non représenté) manoeuvré par un ou plusieurs vérins permet de fermer cette ouverture de manière étanche. Pendant la marche de l'organe sans fin râcleur 14 la matière malaxée est entraînée devant l'ouverture d'évacuation 29. Quand celle-ci est ouverte la matière s'échappe de la caisse 1. Quand l'ouverture 29 est fermée par le volet correspondant ou quand la matière est restée arrêtée aussitôt après l'ouverture 29, l'organe sans fin râcleur 14 continue à l'entraîner sans risque de bourrage, ni d'efforts excessifs.

Quand la machine de l'invention est destinée à mélanger et à répandre des engrais (figure 4), elle est équipée d'un moyen de chargement à godet 30 remplissant la caisse 1 par le dessus. L'ouverture d'évacuation 29 est prévue dans la paroi extrême arrière 9, au-dessus d'un dispositif 31 d'égalisation du débit et d'épandage qui n'est représenté que schématiquement.

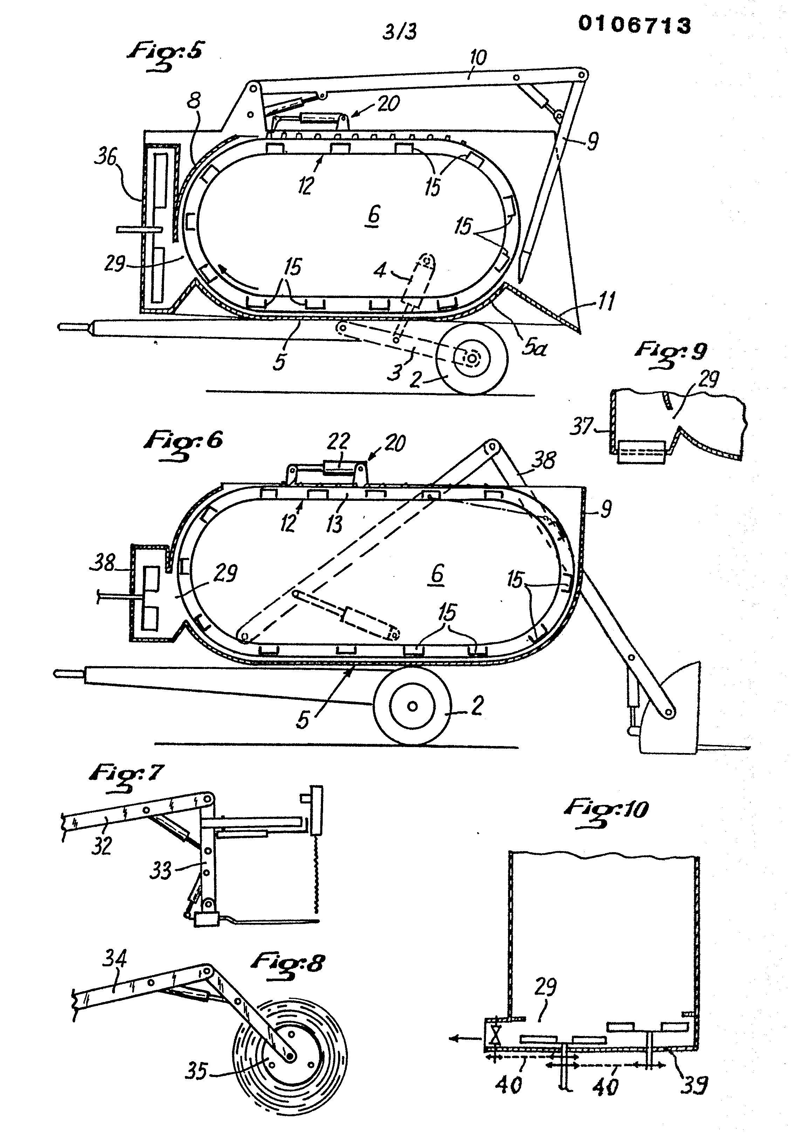

Quand la machine de l'invention est destinée à mélanger et à distribuer du fourrage, elle est équipée des bras 10 et de la paroi arrière mobile 9 comme expliqué plus haut. En variante, la paroi arrière 9 pourrait être fixe et la machine pourrait être équipée d'un bras 32 muni d'une désileuse 33 à lame de coupe (figure 7) ou d'un bras 34 à dérouleuse de balles rondes 35 (figure 8). L'ouverture d'évacuation 29 est prévue dans la paroi avant 8 (figure 5) et elle est associée à un dispositif de projection à turbine 36 ou à un tapis transversal 37 d'entraînement et de déversement (figure 9). Dans ce cas, l'espacement des barres transversales 15 successives est déterminé pour qu'il permette le passage d'un bloc de fourrage découpé par la désileuse 33.

Quand la machine de l'invention est destinée à mélanger et à répandre du lisier et du fumier, elle est équipée d'un bras de chargement 38 à godet et à fourche (figure 6) qui charge la caisse 1 entre les barres espacées 15. L'ouverture d'évacuation 29 est prévue dans la paroi avant 8 et elle est associée à un dispositif d'éjection 39 à deux turbines (figure 10) entraînées par des chaînes 40.

L'équipement possible de la machine n'est pas décrit en détail parce qu'il est connu en soi et parce qu'il ne fait pas partie de l'invention. Il est mentionné ici uniquement pour faire apprécier les avantages de l'invention. C'est grâce à la conception nouvelle qu'apporte celle-ci que la machine peut servir à plusieurs usages divers après avoir reçu l'équipement auxiliaire connu approprié.

Dans certaines circonstances, en fonction de la course des vérins 22, il peut se révéler nécessaire de prévoir une ou plusieurs saillies 21 sur la face extérieure des éléments d'assemblage 16, comme on l'a indiqué sur les dessins, quand ces éléments existent et quand leur longueur est supérieure à la course des vérins 22. Cette disposition est tout à fait équivalente à celle qui prévoit des saillies 21 uniquement sur les éléments de liaison 19 quand elle est compatible avec la course des vérins 22. C'est dans cet esprit que la disposition décrite doit être comprise.

REVENDICATIONS

1. Machine mélangeuse - distributrice ayant un châssis à roues (2) supportant une caisse (1) avec un fond (5), deux parois latérales (6, 7), deux parois extrêmes (8, 9), un organe râcleur sans fin (14) comprenant des barres transversales espacées (15) monté sur les parois latérales (6, 7) avec un brin supérieur proche du sommet de la caisse entraîné en déplacement par un mécanisme moteur (20) et un brin inférieur proche du fond (5) caractérisée en ce que les parois latérales (6, 7) de la caisse (1) sont pourvues respectivement chacune d'un chemin de guidage (12) s'étendant sur la longueur de l'organe râcleur sans fin (14) et guidant les extrémités opposées des barres transversales espacées (15).

2. Machine selon la revendication 1 caractérisée en ce que chaque chemin de guidage (12) comprend des profilés en U (13) disposés avec leur ouverture tournée vers l'intérieur de la caisse (1) et servant à guider les barres transversales (15).

3. Machine selon la revendication 2 caractérisée en ce que chaque barre transversale (15) est munie à ses extrémités d'un élément d'assemblage (16) pourvu d'éléments d'usure (17) engagés dans les profilés en U (13) et les éléments d'assemblage (16) successifs sont réunis et tenus espacés par des éléments de liaison successifs (19) avec lesquels ils sont articulés.

4. Machine selon la revendication 3 caractérisée en ce que le mécanisme moteur (20) agit directement sur les éléments de liaison (19) pour faire circuler l'organe râcleur articulé (14).

5. Machine selon la revendication 3 caractérisée en ce que les chemins de guidage (12) ont dans leur partie supérieure une zone centrale rectiligne de longueur suffisante pour que chaque élément de liaison (19) se trouve en passant par cette zone en position pour coopérer avec deux vérins (22) qui sont montés au sommet des parois latérales (6, 7) avec un dispositif à cliquet (23) à leur extrémité mobile tandis que des saillies (21) sont prévues sur la face extérieure des éléments de liaison (19) pour être poussées ou tirées par les cliquets (23) pendant les courses alternées des vérins.

6. Machine selon la revendication 5 caractérisée en ce que les deux vérins (22) sont réunis à leur extrémité mobile par une barre d'attelage transversale (26) soutenue par les parois latérales (6, 7) et munie de joues extrêmes de guidage (28).

7. Machine selon l'une quelconque des revendications 5, 6 caractérisée en ce que chaque paroi latérale (6, 7) est munie d'une chape (24) d'articulation d'un vérin (22) par son extrémité fixe de façon à pouvoir être allongé dans une direction ($F_1$) ou dans la direction opposée à 180° ($F_2$) afin de déplacer l'organe râcleur articulé (14) dans un sens ou dans le sens opposé.

8. Machine selon l'une quelconque des revendications 1 à 7 caractérisée en ce que les parois extrêmes (8,9) sont incurvées en demi-cylindre de diamètre substantiellement égal à la hauteur de la caisse (1).

0106713

*Fig.1*

*Fig.3*

*Fig.4*

Fig.2

Fig. 5

Fig. 6

Fig. 7

Fig. 8

Fig. 9

Fig. 10

**Office européen des brevets**

**RAPPORT DE RECHERCHE EUROPEENNE**

Numéro de la demande

EP  83 40 1645

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 331 970  (STORTI)<br>* Page 3, ligne 19 - page 4, ligne 16; figures 1-4 *<br><br>--- | 1 | A 01 F  25/20<br>A 01 C  23/00<br>A 01 K   5/00<br>B 65 F   3/18 |
| A | FR-A- 730 575  (RADERMACHER)<br>* En entier *<br><br>--- | 1,2,4 | |
| A | FR-A-2 432 832  (WESTERIA MASCHINENFABRIK)<br><br>--- | | |
| A | US-A-2 896 290  (GOLLNICK)<br><br>--- | | |
| A | DE-A-1 481 237  (FAHRZEUGBAU HALLER)<br><br>----- | | |

DOMAINES TECHNIQUES RECHERCHES (Int. Cl. ³)

A 01 F
A 01 C
B 60 P
B 65 F

Le présent rapport de recherche a été établi pour toutes les revendications

| Lieu de la recherche<br>LA HAYE | Date d'achèvement de la recherche<br>24-11-1983 | Examinateur<br>MARTIN D.R.V. |
|---|---|---|